# FASCICULE DE BREVET EUROPEEN

(11) **EP 0 897 661 B1**
(45) Date de publication et mention de la délivrance du brevet: **10.11.1999**
(21) Numéro de dépôt: 97401920.0
(22) Date de dépôt: 11.08.1997
(51) Int. Cl.: A01G 17/08

(54) **Procédé et machine d'agrafage de fils de palissage**
Verfahren und Vorrichtung zum Heften von Spalierdrähten
Method and device for stapling espalier wires

(43) Date de publication de la demande: 24.02.1999
(73) Titulaire: Collard, Michel, 51150 Bouzy (FR)
(72) Inventeur: Collard, Michel, 51150 Bouzy (FR)
(74) Mandataire: Gérardin, Robert Jean René

(56) Documents cités:
- EP-A- 0 318 406
- FR-A- 2 621 449
- US-A- 3 015 187

## Description

La présente invention concerne un procédé d'agrafage automatique de fils releveurs utilisés pour le palissage de végétaux plantés en ligne, notamment de la vigne, et la machine permettant la réalisation et la mise en place des crochets d'agrafage selon ledit procédé.

Dans la plupart des vignobles existants actuellement dans le monde, les rameaux de vigne sont, à un certain stade de leur cycle végétatif annuel, relevés puis resserrés vers les fils de soutien et de charpente reliant les piquets par l'intermédiaire de fils dits releveurs et disposés sur le sol, de chaque côté de la ligne de plant, qui sont alors relevés, manuellement ou mécaniquement, en soulevant les rameaux, pour être progressivement retenus par des crochets, dont les piquets de vigne sont équipés à cet effet en vue de palissage.

On comprend que, si des liens intermédiaires ne sont pas disposés, les fils releveurs d'un même rang seront trop écartés entre les piquets. Beaucoup de travaux de viticulture étant de plus en plus mécanisés, ils exigent des tolérances d'alignement, tant de la végétation que des grappes. Ces tolérances ne seront obtenues et respectées qu'en recourant à des moyens permettant d'ajouter des liens entre les fils releveurs suffisamment solides et pouvant se défaire facilement à l'issue du cycle végétatif, soit pour des opérations de prétaille et de taille manuelles ou à des opérations mécaniques. Ces liens supplémentaires ne doivent pas contrarier l'action des machines intervenant sitôt après leur pose : rogneuses, appareils de traitement, récolteuses, prétailleuses.

Or, la pose de liens intermédiaires amovibles constitue une contrainte très lourde qui, lors de leur mise en place manuelle, grève lourdement le coût d'exploitation.

En effet, le volume et le poids de la végétation à manipuler sont souvent très importants : il faut en effet ramasser les fils à terre, relever la végétation, mettre les fils en place dans les crochets des piquets , puis assurer "l'accolage" des deux fils releveurs par l'intermédiaire de petits crochets ou d'agrafes en resserrant la végétation pour éliminer les ventres.

Aussi, une mécanisation partielle puis totale de ces tâches de relevage et d'agrafage intermédiaire s'est-elle progressivement développée en passant du simple relevage mécanique de la végétation (Brevets français 2.170.946 et 2.569.525) et des fils de palissage au relevage et à l'agrafage mécanique entièrement automatique (brevets français 2.302.025 et 2.621.449).

Toutefois, jusqu'alors, on a recouru à des agrafes préfabriquées, regroupées dans un chargeur, mises en place en cavalier sur les deux fils releveurs accrochés aux piquets, préalablement rapprochées mécaniquement.

Ce système d'agrafage présente comme inconvénients d'être coûteux, car les agrafes doivent être achetées à une entreprise spécialisée qui les a conçues uniquement pour cet usage dans une dimension standard, et de ne permettre aucune adaptation de l'écartement des crochets de celles-ci.

La présente invention a pour but de remédier à ces inconvénients. Cette invention, telle qu'elle est caractérisée dans les revendications, résout le problème consistant à définir un procédé et à créer une machine d'agrafage automatique des fils releveurs utilisés pour le palissage de végétaux cultivés en ligne, telle que la vigne, machine avec laquelle, d'une part, la végétation soit parfaitement maintenue serrée entre les fils tel que son port soit érigé de manière à ce que l'ensemble de cette végétation se présente sous la forme d'une haie facile à traiter, à tailler, à rogner et à récolter , et facilitant ainsi le passage, entre les rangs, des hommes et des machines et permettant l'exposition solaire nécessaire et, d'autre part, les agrafes puissent être réalisées in-situ, selon des dimensions correspondant strictement au besoin, à partir de fils de fer conditionnés en bobines standard, ceci pour un coût très réduit.

Les avantages obtenus grâce à cette invention consistent essentiellement en ceci que l'approvisionnement des produits nécessaires est totalement indépendant de fabricants spécialisés, puisque les bobines de fils de fer utilisées constituent un produit courant du commerce, que les défauts d'agrafage sont évités du fait que l'inclinaison des becs des agrafes peut être modulée selon le besoin, et que les réglages et la mise en oeuvre de la machine sont très simples.

D'autres caractéristiques et avantages apparaîtront dans la description qui va suivre d'une machine de passage et d'agrafage de la vigne travaillant dans un plan vertical et d'une machine de palissage et d'agrafage travaillant dans des plans horizontaux, réalisées selon l'invention, données à titre d'exemples non limitatifs au regard des dessins annexés sur lesquels :
- la figure 1 représente une vue de côté schématique d'un rang de vigne non palissé, fils releveurs au sol,
- la figure 2 représente une vue de côté schématique du rang de vigne selon la figure 1, après accrochage aux piquets des fils de relevage,
- la figure 3 représente une vue de dessus schématique du rang de vigne selon la figure 2,
- la figure 4 représente une vue de côté schématique d'un rang de vigne selon la figure 2, après agrafage des fils de relevage,
- la figure 5 représente une vue de dessus d'un rang de vigne après accrochage et agrafage des fils releveurs, selon la figure 4,
- la figure 6 représente une vue de face d'une machine d'agrafage travaillant dans un plan vertical, en position neutre,
- la figure 7 représente une vue de face de la machine d'agrafage selon la figure 6, en position de rapprochement des fils releveurs,
- la figure 8 représente une vue de face de la machine d'agrafage selon la figure 6, en position de maintien rapproché des fils releveurs et d'amenée de l'extrémité du fil de fer de réalisation de l'agrafe,
- la figure 9 représente une vue de face de la machine d'agrafage selon la figure 6, après réalisation de l' agrafage et retour en position neutre du dispositif,
- la figure 10 représente une vue de face du dispositif de réalisation de l'agrafage dans la position correspondant à la figure 8,
- la figure 11 représente une vue de face du dispositif de réalisation de l'agrafage en position de formage et de séparation de l'agrafe,
- la figure 12 représente une vue de face du dispositif de réalisation de l'agrafe en position de retrait précédant le retour en position neutre de la machine,
- la figure 13 représente une vue de dessus d'un premier mode de réalisation d'une machine d'agrafage travaillant dans des plans horizontaux, en position d'agrafage,
- la figure 14 représente une vue de face de la machine d'agrafage selon la figure 13, en position d'agrafage,
- la figure 15 représente une vue de dessus d'un second mode de réalisation d'une machine d'agrafage travaillant dans des plans horizontaux, en position d'agrafage,
- la figure 16 représente une vue de face de la machine selon la figure 15,
- la figure 17 représente une vue de face d'une agrafe à becs droits,
- la figure 18 représente une vue de face d'une agrafe à becs resserrés de 15 ° vers l'intérieur,
- la figure 19 représente une vue de face d'une agrafe à becs resserrés vers l'intérieur, d'un angle supérieur à 15 °,
- la figure 20 représente une vue en coupe schématique d'un rang de vigne, après agrafage à hauteur H₁ de fils de palissage avec une agrafe telle que représentée sur la figure 18,
- la figure 21 représente une vue en coupe schématique d'un rang de vigne, après nouvel agrafage de la végétation à une hauteur H₂ avec une agrafe telle que représentée sur la figure 19.
- La figure 22 représente une vue de dessus schématique d'un dispositif d'immobilisation longitudinale pendant l'opération d'agrafage de la machine selon les figures 13 à 16.

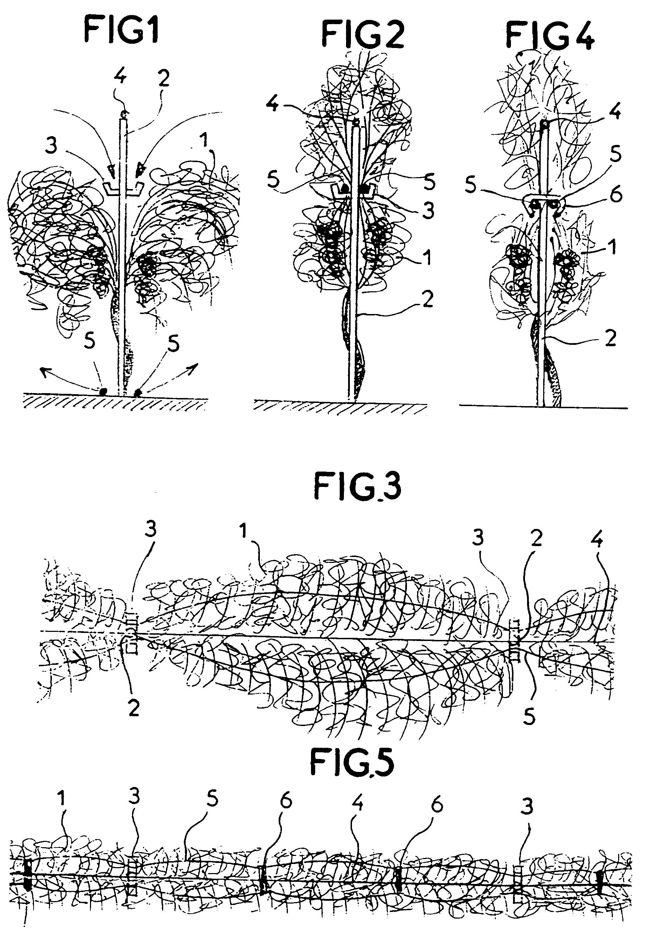

Les figures 1 à 5 représentent un rang de vigne **1** soutenu par des piquets **2**, à crochets **3**, reliés par un fil de charpente **4**, dont les rameaux peuvent être redressés par des fils releveurs **5**, placés dans les crochets **3** et reliés entre eux par des agrafes **6**.

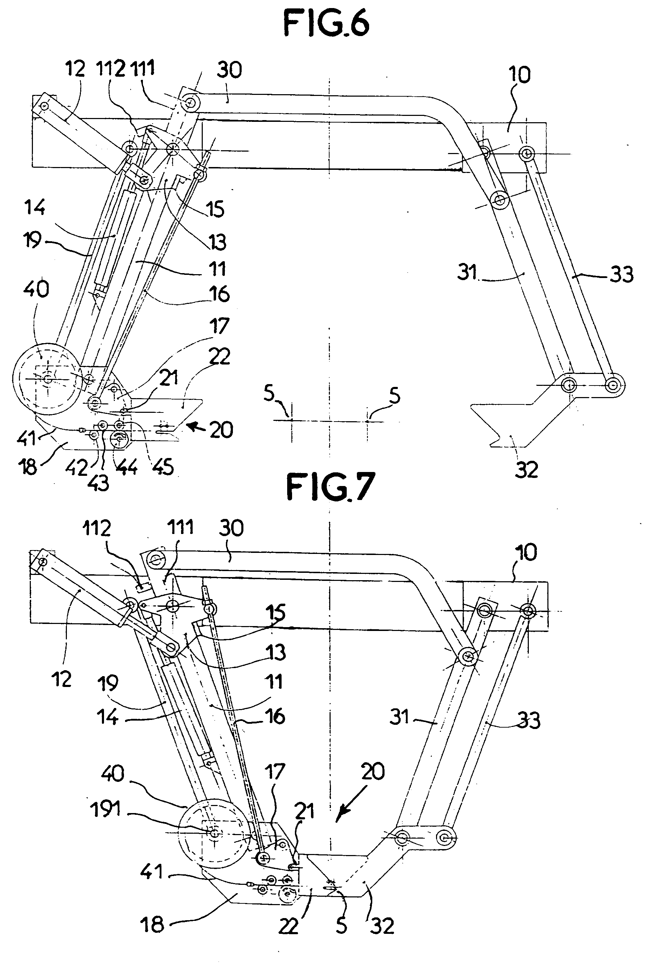

Les figures 6 à 9 représentent une machine d'agrafage automatique de fils releveurs **5** travaillant dans un plan vertical, selon un mode de réalisation simplifié de l'invention, utilisée pour le palissage de la vigne, comportant un châssis **10** par rapport auquel s'articule un bras **11**, supportant une tête d'agrafage **20**, mû par un vérin hydraulique **12** par l'intermédiaire d'un triangle de commande articulé **13**, à débattement contrôlé par un ressort à gaz **14** et limité par une butée **15**, relié par une tringle **16** à un triangle de renvoi **17** de manoeuvre de la tige de commande **21** de la tête d'agrafage **20** reliée au bras **11** par une platine articulée **18** formant avec le châssis **10**, par l'intermédiaire d'une biellette **19**, un parallélogramme articulé ; le prolongement **111** du bras articulé **11** étant relié par une biellette **30** à un bras opposé **31**, articulé lui aussi par rapport au châssis **10**, supportant un guide-fil **32** formant lui-aussi avec le châssis **10**, par l'intermédiaire d'une biellette **33**, un parallélogramme articulé. La bobine **40** de fil **41** est montée sur un prolongement de l'axe d'artculation **191** de la biellette **19** et le fil **41** est guidé et entraîné vers la tête d'agrafage **20** par des rouleaux redresseurs **42** et **43**, et entraîneur **44** combiné à un rouleau presseur **45**.

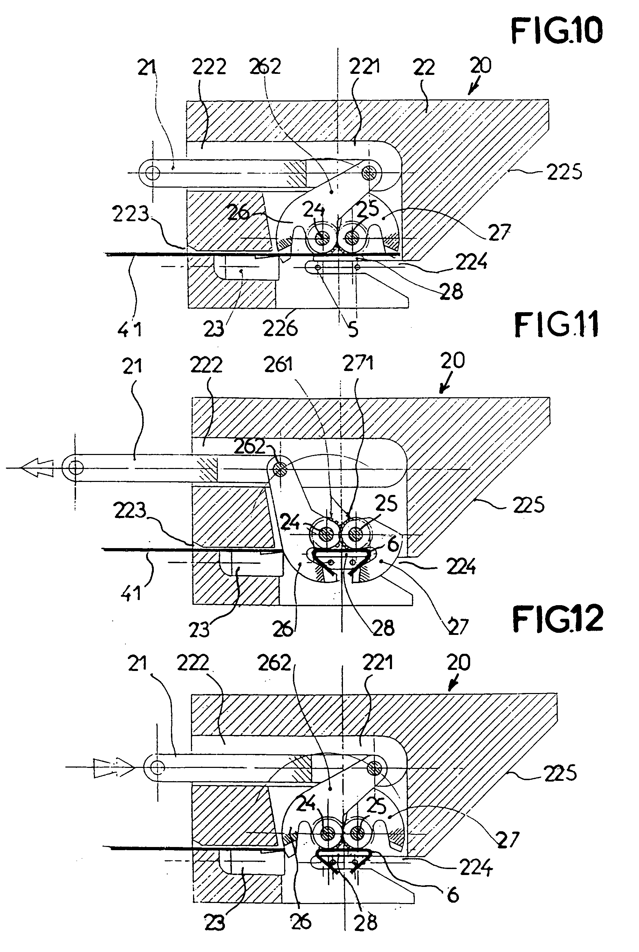

Les figures 10 à 12 représentent une tête d'agrafage **20** constituée d'un bec **22** comportant un évidement **221** communiquant avec l'extérieur par un conduit latéral **222** de passage de la tige de commande **21**, un orifice guide-fil **223** surmontant une mâchoire fixe **23**, une fente **224** située à la partie inférieure de la rampe **225** du bec **22** et une ouverture verticale **226**.

L'évidement **221** est traversé par deux axes paralléles **24** et **25**, par rapport auxquels s'articulent solidairement par l'intermédiaire de pignons **261** et **271** des mâchoires rotatives semi-circulaires **26** et **27**, dont l'une **26**, reliée à la tige de commande **21** par un levier **262**, vient, lors de sa rotation, frôler la mâchoire fixe **23** pour cisailler le fil **41** et rabattre, en combinaison avec l'autre mâchoire **27**, chacune des extrémités du tronçon de fil sous une enclume rétractable **28**.

En examinant maintenant plus en détail les figures 1 à 3, comparativement aux figures 4 et 5, on remarque que les agrafes **6** reliant les fils releveurs **5** préalablement introduits dans les crochets **3** des piquets **2** permettent de contenir la végétation du rang de vigne **1** de façon régulière, facilitant le rognage, les traitements, l'ensoleillement des grappes de raisin, la récolte de celles-ci et le prétaillage.

En se reportant aux figures 6 à 9, on remarque que l'agrafage est réalisé en respectant les étapes successives suivantes :
étape a) : aménage des deux fils releveurs **5** dans la tête d'agrafage **20**,
étape b) : formation de l'agrafe **6** autour des deux fils releveurs **5** maintenus rapprochés,
étape c) libération de l'agrafe **6** ainsi formée, ainsi que des fils releveurs **5** qui restent reliés par l'agrafe **6**,
étape d) retrait de la tête d'agrafage **20**.

Ces étapes étant illustrées respectivement par les figures 6 à 9, nous remarquons :
1) Sur la figure 6, suite à la commande d'agrafage transmise au vérin hydraulique **12**, celui-ci pousse, par l'intermédiaire du triangle **13**, le bras pivotant **11**, qui pousse à son tour, par l'intermédiaire de la biellette **30**, le bras support **31** du guide-fil **32**.
   Les mouvements des deux bras **11, 31** sont ainsi synchronisés, le triangle **13** étant rendu solidaire du bras pivotant **11** par un ressort à gaz **14**, la poussée exercée par celui-ci sur la butée **15** solidaire du triangle **13** et en appui sur le bras **11**, ce qui provoque le rapprochement des deux bras **11**, **31** munis respectivement de la tête d'agrafage **20** et du guide-fil **32**, qui entraînent avec eux les fils releveurs **5** afin que, en fin de course de rapprochement, l'extrémité du fil **41** provenant de la bobine **40** soit engagée au dessus de l'enclume **28** alors sortie.
2) Sur la figure 7, en fin de course de rapprochement des bras **11, 31,** le bras **11** est arrivé au contact de la butée **112** solidaire du châssis **10,** le vérin **12** poursuit cependant sa course en faisant pivoter le triangle **13,** ce qui a pour effet de comprimer le ressort à gaz **14** et de provoquer la commande de l'agrafage par l'intermédiaire de la tringle **16** du triangle de renvoi **17** et de la tige **21**; le fil amené au dessus de l 'enclume **28** est alors cisaillé et le tronçon obtenu est formé.

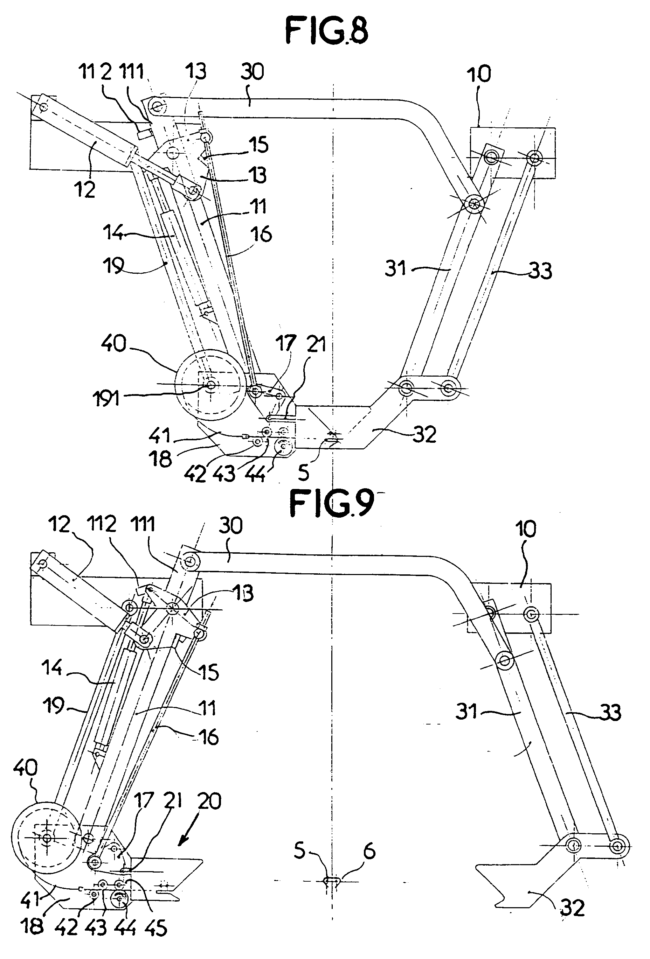

3) Sur la figure 8, le vérin **12** commence à se rétracter et le triangle **13** est ramené au contact du bras **11** par l'intermédiaire de la butée **15**, l'agrafe préalablement formée est libérée et l'avance du fil est autorisée.
4) Sur la figure 9, le vérin **12** poursuit sa rétraction , entraînant l'écartement des bras **11** et **31** par l'intermédiaire de la biellette **30 ;** la tête d'agrafage **20** et le guide-fil **32** se retrouvent dans leur position initiale et l'enclume **28** de la tête d'agrafage **20** est à nouveau sortie pendant que l'extrémité du fil est avancée d'un pas correspondant à la longueur développée de l'agrafe.

Ce cycle s'effectue très rapidement, étant donné la faible course du vérin de commande **12**.

Si l'on examine maintenant plus en détail les figures 10 à 12, on remarque que, au cours des étapes a à c, la tige de commande **21** d'actionnement des mâchoires rotatives **26** et **27** a successivement maintenu lesdites mâchoires, solidarisées en rotation par les pignons **261** et **271**, entièrement ouvertes pour permettre l'amenage du fil **41** au dessus de l'enclume **28** (fig.10) puis rapproché celles-ci pour obtenir successivement le ci-saillage du fil **41** par l'intermédiaire de la mâchoire **26** et de la mâchoire fixe **23** et le formage de l'agrafe **6** sur l'enclume **28** autour des fils releveurs **5** (fig.11), puis ramené les mâchoires **26** et **27** en position totalement écartée, pour permettre la libératon de l'agrafe **6**, qui est accompagnée par un retrait de l'enclume **28**.

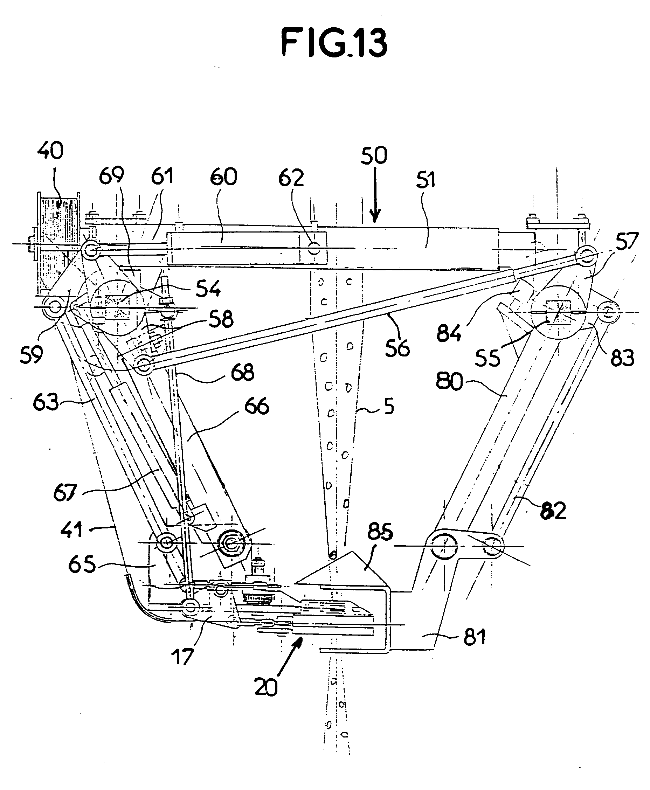

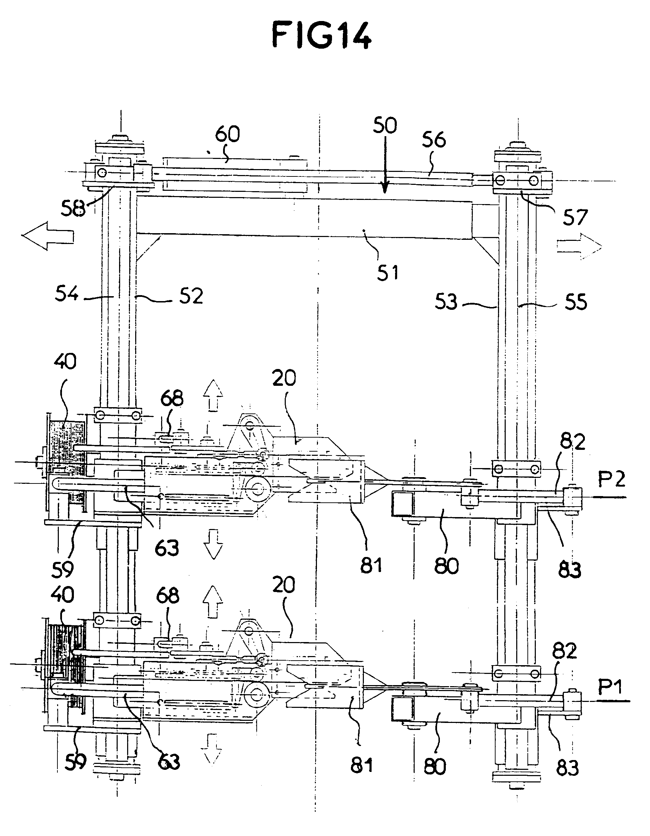

Les figures 13 et 14, ainsi que 15 et 16, représentent deux variantes du mode de réalisation d'une machine d'agrafage de fils releveurs **5,** travaillant dans deux plans horizontaux **P**_{**1**} et **P**_{2,} comportant un châssis **50** à traverse télescopique **51** supportant des montants **52, 53,** sur le devant desquels sont fixés des arbres de manoeuvre **54, 55** solidarisés en rotation par une bielle **56** et des manetons simple **57** et double **58,** dont l'un d'entre eux **54** est relié, par un triangle de manoeuvre **59**, respectivement à la tige **61** d'un vérin **60**, dont la tête du cylindre est fixée par un axe d'articulation **62** à la traverse télescopique **51**, et à une biellette **63**, reliée à une platine articulée **65** formant, avec un bras **66** articulé par rapport à la tête d'agrafage **20** et par rapport à l'arbre de manoeuvre **54**, un parallélogramme articulé, à débattement contrôlé par un ressort à gaz **67** et limité par une butée **69**.

Une tringle **68** relie le triangle de manoeuvre **59** de la tête d'agrafage **20**. Le second arbre de manoeuvre **55** entraîne, en rotation, un bras **80** supportant le guide-fil **81**, qui forme, avec celui-ci et avec une biellette **82** reliée au montant **53** par une équerre **83**, un parallélogramme articulé.

La conception de la tête d'agrafage est, dans ce cas, identique à celle de la tête **20** dont la construction et le fonctionnement ont été décrits pour la machine d'agrafage travaillant dans un plan vertical, corespondant aux figures 6 à 9. Il en est de même pour la manoeuvre des bras **66** et **80** et pour la commande de la tête d'agrafage.

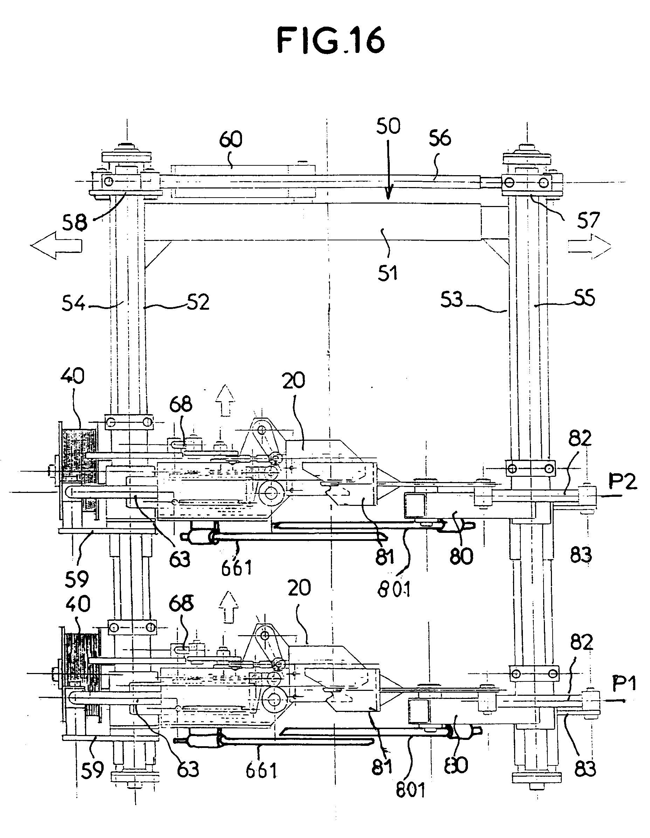

On remarquera que, dans ce second mode de réalisation, plusieurs têtes d'agrafage peuvent être montées en superposition sur leurs arbres de manoeuvre **54, 55**, en respectant des hauteurs par rapport au sol et un intervalle vertical adaptés à chaque cas, puisque ces adaptations peuvent être réalisées par simple coulissement des supports de bras sur les dits arbres de manoeuvre **54, 55** et immobilisation à bonne hauteur. On remarquera aussi, sur les figures 14 et 16, que, dans ce second mode de réalisation, toutes les têtes d'agrafage sont actionnées collectivement par l'intermédiaire du vérin **60** fixé à la traverse **51** et de la bielle de liaison **56**.

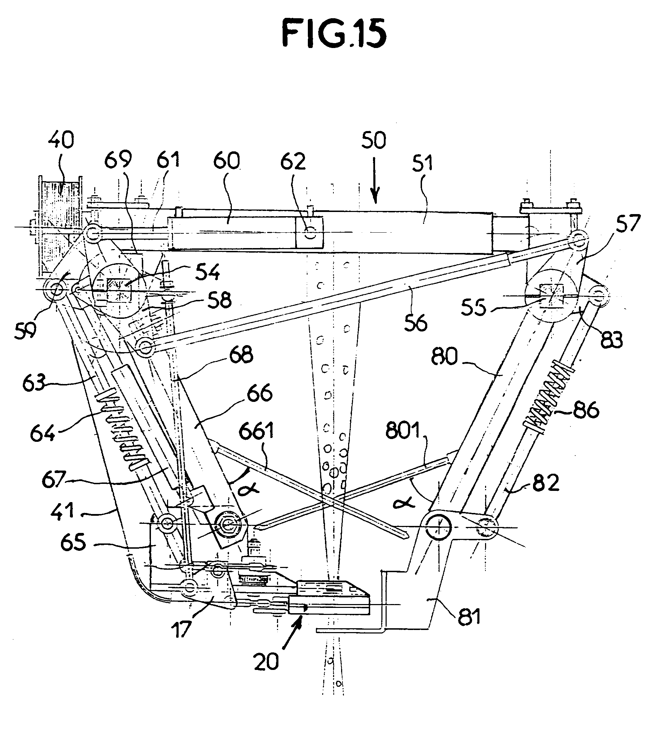

En examinant successivement plus en détail les figures 13 et 15, on remarque :
- sur la figure 13, que la force d'inertie en fin de course du bras **80** et du guide-fil **81** est absorbée par une butée à gaz **84** et que le dit guide-fil **81** est muni, sur sa face avant, d'un déflecteur **85** de forme triangulaire, destiné à écarter les rameaux de la tête d'agrafage **20**, afin d'éviter toute interférence de ceux-ci avec le système d'agrafage,
- sur la figure 15, que, outre l'utilisation d'une butée à gaz **84**, la biellette **82** de liaison du guide-fil **81** avec l'équerre **83** et la biellette **63** de liaison du triangle de manoeuvre **59** avec la platine **65** de la tête d'agrafage **20** comportent, respectivement, un amortisseur à ressort **86** et **64**, qui permet d'encaisser les efforts d'inertie de balayage des bras.

On remarquera, aussi, sur la figure 15, que les bras **66** et **80** sont munis chacun d'une tige rigide **661** et **801**, dirigée vers l'intérieur selon un angle alpha déterminé pour l'obtention d'un balayage croisé de la végétation au niveau des fils de palissage concernés au cours de la phase de rapprochement de la tête d'agrafage **20** et du guide-fil **81,** en aval de ceux-ci, toujours dans le but d'éliminer toute gêne par les rameaux au moment de l'opération d'agrafage elle-même.

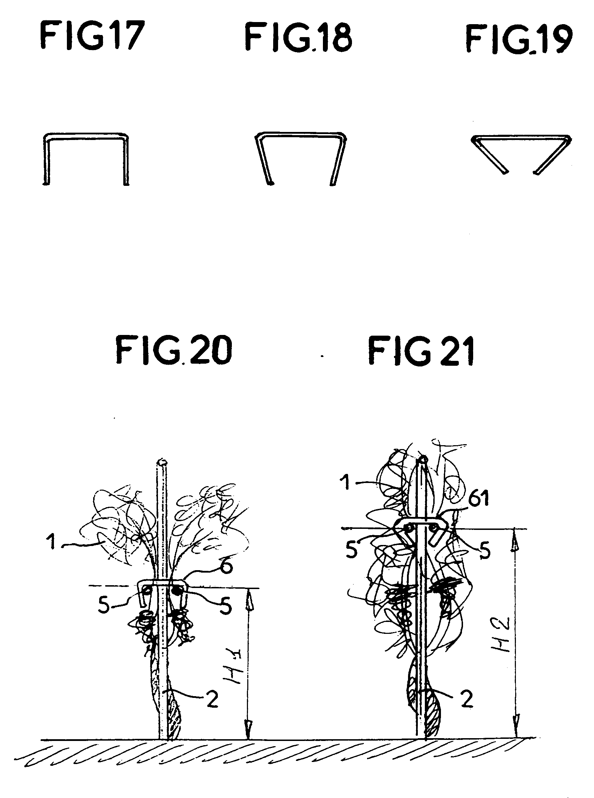

En examinant maintenant les figures 17 à 19, à la lumière des figures 20 et 21, on remarque que, compte-tenu des possibilités de réglage existant sur la tête d'agrafage et ses organes de manoeuvre, différentes formes et dimensions peuvent être aussi données aux agrafes : forme en "U", correspondant aux figures 17 et 18, permettant, comme représenté sur la figure 20, de retenir l'un vers l'autre les fils de passage à une hauteur **H**_{**1**} et à une distance assez réduite l'un de l'autre, du fait du faible développement de la végétation au stade de développement correspondant, tout en laissant la possibilité de libérer à nouveau les fils par simple secouage vertical, afin de les redisposer à une hauteur **H**_{**2**}, comme représenté sur la figure 21, en utilisant, par exemple, une agrafe en forme de trapèze, telle que représentée à la figure 18 ou 19, qui offrira, à ce second stade du développement de la végétation, une meilleure tenue aux sollicitations latérales que l'agrafe en "U" des figures 17 et 18, sans pour autant exclure la possibilité de libérer les fils par secouage ; l'agrafe représentée à la figure 19, destinée à être utilisée au dernier stade du développement, comporte des becs repliés plus fortement, de façon à offrir une bonne résistance aux sollicitations résultant des travaux effectués sur la vigne au dernier stade de son développement et de la récolte, sans exclure, néanmoins, une possibilité aisée de décrochage par rapprochement mécanique des deux fils.

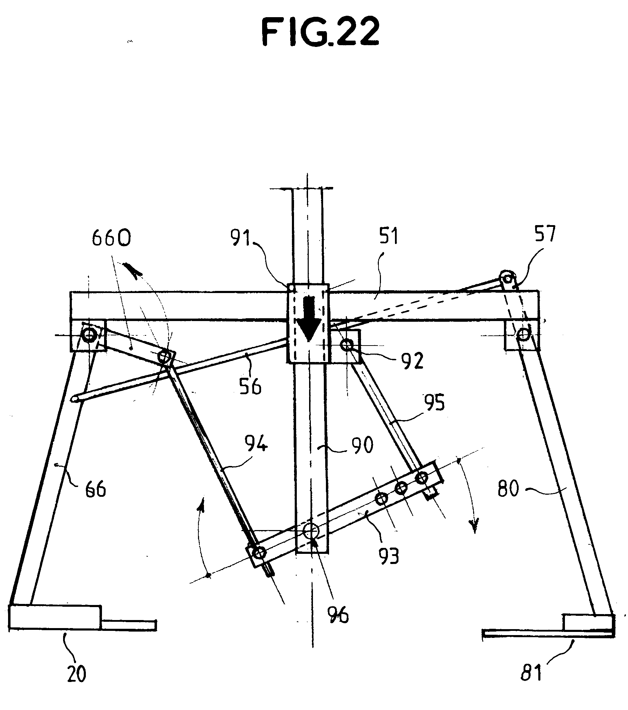

En se rapportant maintenant à la figure 22, on remarque, que la machine d'agrafage, quelle que soit son mode de réalisation, et tout particulièrement, par rapport à la traverse **51** dans son mode de réalisation à articulation dans un plan horizontal des bras **66,** porte-tête d'agrafage **20,** et **80** porte guide-fil **81,** peut être immobilisée longitudinalement lors de l'opération d'agrafage par coulissement sur un arbre longitudinal **90** solidaire du châssis du tracteur, d'un fourreau **91**, sous lequel est fixée la traverse **51**, par l'intermédiaire d'un système de levier **660** solidaire du bras **66** et d'un pivot **92** solidaire du fourreau **91**, reliés respectivement par des bielles **94** et **95** aux extrémités d'un palonnier **93** s'articulant par rapport à l'extrémité de l'arbre **90** par l'intermédiaire d'un axe **96**.

Ainsi, comme on le voit, tout rapprochement simultané des bras **66** et **80** lors de l'opération d'agrafage entraîne, par l'intermédiaire du lever **660**, de la bielle **94**, du palonnier **93** et de la bielle **95**, un coulissement du fourreau **91** supportant la machine, dans le sens opposé au déplacement du tracteur afin d'introduire un retard de la machine par rapport au tracteur suffisant pour assurer une quasi-immobilisation dans l'espace de la machine pendant l'opération d'agrafage afin d'éviter, ou à tout le moins de réduire, le coulissement, sur le fil, de la tête d'agrafage susceptible de provoquer un tassement longitudinal de la végétation préjudiciable à son développement ultérieur.

On comprend que dès l'écartement des bras, faisant suite à l'opération d'agrafage, le fourreau **91** est sollicité dans le sens opposé, par les mêmes moyens pour rattraper le retard, par rapport au tracteur et ramener la machine en position neutre.

Selon une variante du dispositif, le déplacement du fourreau **91** sur l'arbre **90** peut être obtenu par l'intermédiaire d'un vérin asservi au mouvement des bras **66** et **80**.

## Revendications

1. Procédé d'agrafage de fils releveurs utilisés pour le palissage de végétaux plantés en ligne, notamment de la vigne, consistant à relier de place en place, entre les piquets, les fils releveurs avec des agrafes, caractérisé en ce qu'il consiste à effectuer successivement les opérations suivantes :
a) rapprochement des deux fils releveurs en respectant une distance inférieure à la longueur des agrafes,
b) amenage de l'extrémité libre d'un fil métallique de diamètre approprié au dessus et en travers des fils releveurs, en faisant déborder celle-ci d'une longueur correspondant à celle des becs d'une agrafe,
c) sectionnement du fil à une distance de l'extrémité de celui-ci correspondant à la longueur développée d'une agrafe,
d) pliage des extrémités du tronçon de fil pour former l'agrafe autour des fils releveurs,
e) libération de l'agrafe et des fils releveurs.

2. Procédé selon la revendication 1, caractérisé en ce que le fil métallique conditionné en bobine est redressé puis entraîné sur une distance correspondant à la longueur développée d'une agrafe.

3. Machine d'agrafage de fils releveurs utilisés pour le palissage de végétaux plantés en ligne, notamment de la vigne, permettant de relier de place en place, entre les piquets, les fils releveurs avec des agrafes, en appliquant le procédé selon les revendications 1 et 2, caractérisée en ce quelle comporte, pour l'essentiel, deux bras (**11, 31 - 66, 80**) articulés par rapport à un châssis (**10, 50**), solidarisés en rotation par une bielle (**30, 56**), munis à leur extrémité, respectivement, d'une tête d'agrafage (**20**) et d'un guide-fil (**32, 81**), et en ce que l'articulation des bras (**11,31** - **66, 80**) est contrôlée par un vérin hydraulique (**12, 60**) solidaire du châssis (**10, 50**) et en ce qu'elle est reliée au tracteur par l'intermédiaire d'un dispositif permettant d'obtenir un certain déplacement relatif par rapport à celui-ci.

4. Machine d'agrafage selon la revendication 3, caractérisée en ce que la tête d'agrafage (**20**) et le guide-fil (**32, 81**) sont maintenus alignés l'un par rapport à l'autre par des parallélogrammes articulés, constitués, respectivement, d'une platine (**18, 65**) articulée par rapport à l'extrémité du bras (**11, 66**), et d'une biellette (**19, 63**) reliant la platine (**18, 65**) au châssis (**10, 50**) parallèlement au bras (**11, 66**), et d'une biellette (**33, 82**) reliant le guide-fil (**32, 81**) au châssis (**10, 50**) parallèlement au bras (**31, 80**).

5. Machine d'agrafage selon la revendication 3 ou 4, caractérisée en ce que la tête d'agrafage (**20**) est actionnée par un triangle de renvoi (**17**) articulé par rapport à la platine (**18, 65**), relié par une tringle (**16, 68**) à un triangle de commande ou de manoeuvre (**13, 59**) monté sur l'axe d'articulation du bras (**11, 66**) correspondant et solidarisé à celui-ci par l'intermédiaire d'un ressort à gaz (**14, 67**) ; le débattement dudit triangle de commande ou de manoeuvre (**13, 59**) par rapport au bras (**11, 66**) étant limité, dans un sens, par le ressort à gaz (**14, 67**) et, dans le sens opposé, par une butée (**15, 69**) portée par ledit triangle de commande ou de manoeuvre (**13, 59**).

6. Machine d'agrafage selon l'une des revendications 3 à 5, caractérisée en ce que le vérin hydraulique (**12, 60**) contrôle l'articulation des bras (**11,31 - 66, 80**) par l'intermédiaire du triangle de commande ou de manoeuvre (**13, 59**) auquel il est relié.

7. Machine d'agrafage selon la revendication 3 caractérisée en ce que le rapprochement des bras (**11,31 - 66, 80**) est limité par au moins une butée à gaz (**84**) solidaire du châssis (**10, 50**) contre laquelle vient buter les bras (**11, 66**) et (**31, 80**).

8. Machine d'agrafage selon la revendication 3, caractérisée en ce que la tête d'agrafage (**20**) comporte deux mâchoires articulées (**26,27**), solidarisées en rotation par des pignons (**261,271**), dont l'un (**261**) est muni d'un lever de manoeuvre (**262**) relié au triangle de renvoi (**17**) par une tige de commande (**21**); une mâchoire fixe (**23**) sur laquelle coulisse le fil métallique (**41**) et que la mâchoire articulée (**26**) à lever de manoeuvre (**262**) vient frôler lors de sa rotation ; une enclume escamotable (**28**) disposée dans le prolongement de la mâchoire fixe (**23**), sous les axes parallèles d'articulation (**24,25**) des mâchoires articulées (**26,27**) au dessus d'une fente (**224**), dans laquelle s'introduisent les fils releveurs (**5**) sous l'action du guide-fil (**32**).

9. Machine d'agrafage selon l'une quelconque des revendications 3 à 8, caractérisée en ce que les bras (**66, 80**) sont articulés par rapport au châssis (**50**) par l'intermédiaire d'une traverse (**51**) soutenant des montants (**52, 53**), sur le devant desquels sont fixés des arbres de manoeuvre (**54, 55**), solidarisés en rotation par une bielle (**56**) et des manetons (**57, 58**), sur lesquels est monté, réglable en hauteur, au moins un ensemble d'agrafage, constitué de bras (**66, 80**) munis, à leurs extrémités libres, respectivement d'une tête d'agrafage (**20**) et d'un guide-fil (**32, 81**), dont l'articulation dans le plan horizontal est contrôlée par au moins un vérin hydraulique (**60**) solidaire de la traverse (**51**).

10. Machine d'agrafage selon l'une des revendications 3 à 9, caractérisée en ce que les bras (**66, 80**) de manoeuvre de la tête d'agrafage (**20**) et du guide-fil (**81**) sont munis de tiges (**661, 801**), inclinées vers l'intérieur selon un angle alpha permettant d'assurer un balayage par croisement des deux tiges, repoussant, vers l'aval, la végétation située dans le plan d'agrafage, préalablement à l'exécution de celui-ci.

11. Machine d'agrafage selon la revendication 3, caractérisée en ce que le dispositif permettant d'obtenir un certain déplacment relatif de celle-ci par rapport au tracteur est constitué d'un arbre (**90**), fixé longitudinalement par rapport au châssis du tracteur, sur lequel coulisse un fourreau (**91**), sous lequel est fixée la traverse (**51**) soutenant les montants (**52,53**), dont la position sur l'arbre (**90**) est asservie au mouvement des bras (**66 et 80**) de manoeuvre de la tête d'agrafage (**20**) et du guide-fil (**81**).

12. Machine d'agrafage selon la revendication 11, caractérisée en ce que l'asservissement du fourreau (**91**) au mouvement des bras (**66 et 80**) est obtenu par l'intermédiaire d'un système de levier (**660**) solidaire du bras (**66**) de manoeuvre de la tête d'agrafage (**20**) et d'un pivot (**92**) solidaire du fourreau (**91**), reliés respectivement par des bielles (**94,95**) aux extrémités d'un palonnier (**93**) articulé par rapport à l'extrémité de l'arbre (**90**) par l'intermédiaire d'un axe (**96**).

13. Machine d'agrafage selon la revendication 11, caractérisée en ce que l'asservissement du fourreau coulissant (**91**) au mouvement des bras (**66 et 80**) est obtenu par l'intermédiaire d'un vérin hydraulique reliant ledit fourreau coulissant (**91**) à un point fixe de l'arbre (**90**) et d'un distributeur asservi au mouvement des bras (**66,80**).

## Claims

1. A method of stapling supporting wires used for fencing plants planted in rows, in particular a vine, which consists in securing the supporting wires with staples at various points, between posts, characterised in that it consists in performing the following operations in succession:
a) two supporting wires are held close to one another but kept apart by a distance smaller than the length of the staples,
b) the free end of a metal wire of an appropriate diameter is arranged on top of and across the supporting wires, being arranged so as to project beyond them by a length corresponding to that of the jaws of a staple,
c) a section of wire is cut at a distance from the end thereof corresponding to the open length of a staple,
d) the ends of the section of wire are folded to form the staple around the supporting wires,
e) the staple and supporting wires are released.

2. A method as claimed in claim 1, characterised in that the metal wire wound on a reel is straightened and then fed across a distance corresponding to the open length of a staple.

3. A machine for stapling supporting wires used for fencing plants planted in a row, in particular a vine, enabling the supporting wires to be secured with staples at various points, between the posts, applying the method as claimed in claims 1 and 2, characterised in that it essentially consists of two arms (11, 31 - 66, 80) articulated relative to a frame (10, 50), joined in rotation by means of a connecting rod (30, 56), having at the end thereof respectively a stapling head (20) and a wire guide (32, 81) and in that the swivel action of the arms (11, 31 - 66, 80) is controlled by a hydraulic jack (12, 60) joined to the frame (10, 50) and in that it is linked to the tractor by means of a device which permits a certain displacement relative thereto.

4. A stapling machine as claimed in claim 3, characterised in that the stapling head (20) and the wire guide (32, 81) are retained in alignment with one another by articulated parallelograms, consisting respectively of a plate (18, 65) articulated relative to the end of the arm (11, 66) and a crank link (19, 63) linking the plate (18, 65) to the frame (10, 50) parallel with the arm (11, 66) and a crank link (33, 82) linking the wire guide (32, 81) to the frame (10, 50) parallel with the arm (31, 80).

5. A stapling machine as claimed in claim 3 or 4, characterised in that the stapling head (20) is operated by a triangular reversing lever (17) articulated relative to the plate (18, 65), linked by means of a rod (16, 68) to a triangular control or operating plate (13, 59) mounted on the hinge pin of the corresponding arm (11, 66) and joined thereto by means of a gas spring (14, 67); displacement of said triangular control or operating plate (13, 59) relative to the arm (11, 66) being limited by the gas spring (14, 67) in one direction and by a stop (15, 69) mounted on said triangular control or operating plate (13, 59) in the opposite direction.

6. A stapling machine as claimed in one of claims 3 to 5, characterised in that the hydraulic jack (12, 60) controls the swivel action of the arms (11, 31 - 66, 80) by means of the triangular control or operating plate (13, 59) to which it is linked.

7. A stapling machine as claimed in claim 3, characterised in that movement of the arms (11, 31 - 66, 80) towards one another is limited by at least one gas stop (84) joined to the frame (10, 50), against which the arms (11, 66) and (31, 80) move into a stop position.

8. A stapling machine as claimed in claim 3, characterised in that the stapling head (20) has two articulated jaws (26, 27) joined in rotation by means of pinions (261, 271), one (261) of which is provided with a manoeuvring lever (262) linked to the triangular reversing lever (17) by a control rod (21); a fixed jaw (23) on which the metal wire (41) slides and against which the articulated jaw (26) with the manoeuvring lever (262) brushes as it rotates; a retractable anvil (28) arranged in the extension of the fixed jaw (23) underneath the parallel hinge pins (24, 25) of the articulated jaws (26, 27) above a slit (224) in which the supporting wires (5) are inserted under the action of the wire guide (32).

9. A stapling machine as claimed in any one of claims 3 to 8, characterised in that the arms (66, 80) are swivel-mounted relative to the frame (50) by means of a cross-piece (51) supporting uprights (52, 53), fixed to the front of which are manoeuvring shafts (54, 55), joined in rotation by means of a connecting rod (56) and crank pins (57, 58), on which at least one height-adjustable stapling unit is mounted, comprising arms (66, 80) having respectively at their free ends a stapling head (20) and a wire guide (32, 81), the swivel action thereof in the horizontal plane being controlled by at least one hydraulic jack (60) joined to the cross-piece (51).

10. A stapling machine as claimed in one of claims 3 to 9, characterised in that the manoeuvring arms (66, 80) of the stapling head (20) and the wire guide (81) are fitted with rods (661, 801), inclined towards the interior at an angle alpha so that the two crossed rods push the vegetation located in the stapling plane downstream prior to operation thereof.

11. A stapling machine as claimed in claim 3, characterised in that the device enabling a certain displacement thereof to be produced relative to the tractor consists of a shaft (90), longitudinally fixed relative to the frame of the tractor, on which a barrel (91) slides, underneath which the cross-piece (51) supporting the uprights (52, 53) is fixed, the position thereof on the shaft (90) being servo-driven by the movement of the manoeuvring arms (66 and 80) of the stapling head (20) and the wire guide (81).

12. A stapling machine as claimed in claim 11, characterised in that the barrel (91) is servo-driven by the movement of the arms (66 and 80) due to a lever system (660) joined to the manoeuvring arm (66) of the stapling head (20) and a pivot (92) joined to the barrel (91), linked respectively by connecting rods (94, 95) to the ends of a crossbar (93) which is articulated relative to the end of the shaft (90) by means of a shaft (96).

13. A stapling machine as claimed in claim 11, characterised in that the sliding barrel (91) is servo-driven by the movement of the arms (66 and 80) by means of a hydraulic jack linking said sliding barrel (91) to a fixed point of the shaft (90) and a distributor servo-driven by the movement of the arms (66, 80).

## Patentansprüche

1. Verfahren zum Heften von Haltedrähten für den Einsatz zum Spalieren von in Reihe gepflanzten Pflanzen, insbesondere der Rebe, bei dem von Ort zu Ort zwischen den Pflöcken die Haltedrähte mit Klammern verbunden werden, dadurch gekennzeichnet, daß es in der aufeinanderfolgenden Ausführung der nachstehenden Schritte besteht:
a) Zusammenführen der beiden Haltedrähte unter Einhalten eines Abstands, der geringer ist als die Länge der Klammern,
b) Anordnen des freien Endes eines Metalldrahts geeigneten Durchmessers oberhalb und quer zu den Haltedrähten, wobei dieses um eine Länge zum Überstehen gebracht wird, die derjenigen der Länge der Hakenvorsprünge einer Klammer entspricht,
c) Trennen des Drahts in einem Abstand von dessen Ende entsprechend der abgewickelten Länge einer Klammer,
d) Falten der Enden des Drahtabschnitts zum Formen der Klammer um die Haltedrähte,
e) Freigeben der Klammer und der Haltedrähte.

2. Verfahren nach Anspruch 1, dadurch gekennzeichnet, daß der auf einer Spule gewickelte Metalldraht eine Wegstrecke entsprechend der abgewickelten Länge einer Klammer geradegerichtet und anschließend mitgenommen wird.

3. Heftmaschine für Haltedrähte für den Einsatz zum Spalieren von in Reihe gepflanzten Pflanzen, insbesondere der Rebe, bei dem von Ort zu Ort zwischen den Pflöcken die Haltedrähte mit Klammern verbunden werden, unter Anwendung des Verfahrens nach Anspruch 1 und 2, dadurch gekennzeichnet, daß sie im wesentlichen zwei an einem Rahmen (10, 50) angelenkte Arme (11, 31; 66, 80) umfaßt, die mittels einer Pleuelstange (30, 56) drehbeweglich befestigt sind und die jeweils an ihrem Ende einen Heftkopf (20) und eine Drahtführung (32, 81) aufweisen, und daß die Schwenkbewegung der Arme (11, 31; 66, 80) durch einen an dem Rahmen (10, 50) befestigten Hydraulikzylinder (12, 60) gesteuert ist, und daß sie mit einem Traktor über eine Einrichtung verbunden ist, die einen gewissen Versatz im Verhältnis zu diesem zu erhalten erlaubt.

4. Heftmaschine nach Anspruch 3, dadurch gekennzeichnet, daß der Heftkopf (20) und die Drahtführung (32, 81) gegenseitig durch gelenkige Parallelogramme ausgefluchtet gehalten werden, welche jeweils ausgebildet sind aus einer an dem Ende des Arms (11, 66) angelenkten Platte (18, 65) und aus einem Kniehebel (19, 63), welcher die Platte (18, 65) mit dem Rahmen (10, 50) parallel zu dem Arm (11, 66) verbindet, und aus einem Kniehebel (33, 82), welcher die Drahtführung (32, 81) mit dem Rahmen (10, 50) parallel zum Arm (31, 80) verbindet.

5. Heftmaschine nach Anspruch 3 oder 4, dadurch gekennzeichnet, daß der Heftkopf (20) durch ein an die Platte (18, 65) angelenktes Vorgelegedreieck (17) betätigt wird, welches über eine Stange (16, 68) mit einem auf der Schwenkachse des entsprechenden Arms (11, 66) montiertes, mit diesem mittels einer Gasfeder (14, 67) befestigten Steuer- oder Schaltdreieck (13, 59) verbunden ist; wobei der Schwenkbereich des Steuer- oder Schaltdreiecks (13, 59) gegenüber dem Arm (11, 66) in eine Richtung durch die Gasfeder (14, 67) und in die entgegengesetzte Richtung durch einen von dem Steuer- oder Schaltdreieck (13, 59) getragenen Anschlag (15, 69) begrenzt ist.

6. Heftmaschine nach einem der Ansprüche 3 bis 5, dadurch gekennzeichnet, daß der Hydraulikzylinder (12, 60) die Bewegung der Arme (11, 31; 66, 80) mittels des Steuer- oder Schaltdreiecks (13, 59) steuert, mit welchem er verbunden ist,

7. Heftmaschine nach Anspruch 3, dadurch gekennzeichnet, daß das Zusammenführen der Arme (11, 31; 66, 80) durch wenigstens einen an dem Rahmen (10, 50) befestigten gasbeaufschlagten Anschlag (84) begrenzt wird, gegen den die Arme (11, 66 und 31, 80) in anschlagen.

8. Heftmaschine nach Anspruch 3, dadurch gekennzeichnet, daß der Heftkopf (20) umfaßt: zwei gelenkige Backen (26, 27), die durch Zahnräder (261, 271) drehgekoppelt sind, von denen das eine (261) mit einem mit dem Vorgelegedreieck (17) verbundenen Schalthebel (262) über eine Steuerstange (21) verbunden ist; eine feststehende Backe (23), auf der der Metalldraht (41) gleitet und welche von der gelenkigen Backe (26) mit Schalthebel (262) während ihrer Schwenkbewegung gestreift wird; einen eskamotierbaren Amboß (28), der in der Verlängerung der feststehenden Backe (23) und unterhalb der parallelen Gelenkachsen (24, 25) der gelenkigen Backen (26, 27) oberhalb eines Spalts (224) angeordnet ist, in welchen die Haltedrähte (5) durch die Einwirkung der Drahtführung (32) eingeführt werden.

9. Heftmaschine nach einem beliebigen der Ansprüche 3 bis 8, dadurch gekennzeichnet, daß die Arme (66, 80) an dem Rahmen (50) mittels einer Traverse (51) angelenkt sind, welche Ständer (52, 53) trägt, auf deren Frontseite Schaltwellen (54, 55) befestigt sind, die über eine Pleuelstange (56) und Kurbelzapfen (57, 58) drehbefestigt sind, auf welchen höheneinstellbar wenigstens eine Hefteinheit montiert ist, die gebildet ist aus Armen (66, 80), die an ihren freien Enden jeweils einen Heftkopf (20) und eine Drahtführung (32, 81) aufweisen, deren Schwenkbewegung in der Horizontalen durch wenigstens einen mit der Traverse (51) festen Hydraulikzylinder (60) gesteuert wird.

10. Heftmaschine nach einem der Ansprüche 3 bis 9, dadurch gekennzeichnet, daß die Schaltarme (66,80) des Heftkopfs (20) und der Drahtführung (81) mit gemäß einem Winkel alpha einwärts geneigten Stangen (661, 801) ausgestattet sind, die durch Kreuzen der beiden Stangen die Ausführung einer Kehrbewegung zulassen, wodurch die in der Heftebene angeordnete Vegetation vor Ausführung des Heftens stromabwärts zurückgeschoben wird.

11. Heftmaschine nach Anspruch 3, dadurch gekennzeichnet, daß die Einrichtung, die einen gewissen Versatz im Verhältnis zu dem Traktor zu erhalten erlaubt, aus einer Welle (90) gebildet ist, die längst zum Rahmen des Traktors verläuft, auf dem eine Hülse (91) gleitet, unter der die Traverse (51) fixiert ist, die die Ständer (52, 53) stützt, deren Position auf der Welle (90) an die Bewegung der Schaltarme (66 und 80) des Heftkopfes (20) und der Drahtführung (81) gekoppelt ist.

12. Heftmaschine nach Anspruch 11, dadurch gekennzeichnet, daß die Kopplung der Hülse (91) an die Bewegung der Arme (66 und 80) erzielt wird mittels eines an dem Schaltarm (66) des Heftkopfes (20) befestigten Hebelsystems (660) und eines an der Hülse (91) befestigten Wellenzapfens (92), die jeweils über Pleuelstangen (94, 95) mit den Enden eines Hebels (93) verbunden sind, welcher gegenüber dem Ende der Welle (90) mittels einer Achse (96) angelenkt ist.

13. Heftmaschine nach Anspruch 11, dadurch gekennzeichnet, daß die Kopplung der Gleithülse (91) an die Bewegung der Arme (66 und 80) mittels eines Hydraulikzylinders, welcher die Gleithülse (91) mit einem festen Punkt der Welle (90) verbindet, und eines an die Bewegung der Arme (66, 80) gekoppelten Schiebers, erzielt wird.
